# EUROPEAN PATENT APPLICATION

(11) **EP 4 481 264 A1**
(43) Date of publication of application: **25.12.2024**
(21) Application number: 23181249.6
(22) Date of filing: 23.06.2023
(51) Int. Cl.: F17C 11/00

(54) **PRESSURE VESSEL**

(71) Applicant: Helmut-Schmidt-Universität, 22043 Hamburg (DE)
(72) Inventor: Fleming, Lukas, 22303 Hamburg (DE); Puszkiel, Julián Atilio, 21035 Hamburg (DE); Jepsen, Julian, 22397 Hamburg (DE); Klassen, Thomas, 21465 Wentorf (DE)
(74) Representative: Uexküll & Stolberg

(57) **Abstract**

A pressure vessel (1, 1') for storing or compressing hydrogen comprises a cylindrical portion (2) extending along a longitudinal axis (3) and having a first end (4) and a second end (5). The cylindrical portion (2) comprises a first cap (6) and a second cap (7) at the respective ends 4, 5 of the cylindrical portion (2) so as to form a cylindrical housing having (8) an inner wall (9) and an outer wall (10). The pressure vessel (1, 1') further comprises at least one inlet tube (11) for receiving hydrogen into the pressure vessel (1, 1'), wherein the at least one inlet tube (11) is arranged at the cylindrical portion (2). The pressure vessel (1, 1') further comprises at least one outlet tube (12) for discharging hydrogen from the pressure vessel (1, 1'), wherein the at least one outlet tube (12) is arranged at the cylindrical portion (2).

The pressure vessel (1, 1') comprises a plurality of metal hydride beds (17) arranged inside the housing (8), wherein each metal hydride bed (17) includes a metal hydride (21) for absorption and desorption of hydrogen gas. Each metal hydride bed (17) extends transverse to the longitudinal axis (3), each metal hydride bed (17) having a circumferential shell surface (20) which sealingly abuts the inner wall (9) of the housing (8). The metal hydride beds (17) are arranged parallel and at a distance (D) one above the other such that flow channels (17) are formed there between. Further flow channels (27) are formed between the lowermost metal hydride bed (17) and the inner wall (9) of the housing (8) at the first cap (6) as well as between the uppermost metal hydride bed (17) and the inner wall (9) of the housing (8) at the second cap (7). The flow channels (27) are formed either as an inlet channel (27a) connected to one of the at least one inlet tube (11) or an outlet channel (27b) connected to one of the at least one outlet tube (12). The flow channels (27) are alternatingly formed as an inlet channel (27a) and an outlet channel (27b) in a direction along the longitudinal axis (3) of the cylindrical portion (2) such that a first metal hydride bed (17a) and a second metal hydride bed (17b) of the plurality of metal hydride beds (17), the first and the second metal hydride (17a, 17b) bed being arranged adjacent to one another, share one inlet channel (27a) and such that the second metal hydride bed (17b) and a third metal hydride bed (17c) of the plurality of metal hydride beds (17), the second and the third metal hydride bed (17b, 17c) being arranged adjacent to one another, share one outlet channel (27b).

## Description

The results included in this application were funded by dtec.bw - Center for Digitization and Technology Research of the German Armed Forces. dtec.bw is funded by the European Union - NextGenerationEU.

### FIELD OF THE INVENTION

The present invention relates to a pressure vessel for storing or compressing hydrogen, in particular for use in a hydrogen compressor. The pressure vessel comprises a cylindrical portion extending along a longitudinal axis and having a first end and a second end. The cylindrical portion has a first cap and a second cap at the respective ends of the cylindrical portion so as to form a cylindrical housing having an inner wall and an outer wall. The pressure vessel further comprises at least one inlet tube for receiving hydrogen into the pressure vessel. The pressure vessel further comprises at least one outlet tube for discharging hydrogen from the pressure vessel.

### BACKGROUND OF THE INVENTION

Hydrogen as a substitute for natural gas, oil and coal is becoming increasingly important when it comes to climate protection and a secure energy supply. Due to its low density at ambient conditions, storing of hydrogen is challenging. Hydrogen may be stored in compressed gaseous form in pressure vessels or at low temperatures as liquid hydrogen. Moreover, hydrogen may be stored in pressure vessels that contain metal alloys which upon contact with hydrogen form metal hydrides. The metal alloys may have a powdered form, a granulate form or the form of pellets. The arrangement of metal alloys in a pressure vessel is referred to hereinafter as a metal hydride bed.

US 7,124,790 relates to a system and method for efficiently storing and discharging hydrogen in a hydrogen storage system. The hydrogen storage system comprises a vessel for storing hydrogen in a car, wherein the hydrogen is used as fuel for the car's engine. The vessel comprises a metal hydride bed containing a hydrogen storage metal alloy in powder form. Hydrogen gas is brought into contact with the metal alloy which forms a bond with the hydrogen gas by absorbing it in their interstitial sites thereby forming metal hydrides during an exothermic reaction. In order to desorb the stored hydrogen from the metal alloys in the vessel heat, such as the engine's waste heat, has to be continuously introduced into the metal hydride bed of the vessel during an endothermic reaction.

Vessels containing a metal hydride bed are also used in metal hydride compressors. Such compressors are adapted to compress hydrogen gas from a state of lower pressure to a state of higher pressure.

Metal hydride compressors are for example disclosed in the article "Application of hydrides in hydrogen storage and compression: Achievements, outlook and perspectives", Jose Bellosta von Colbe et al., International journal of hydrogen energy vol. 44 (2019), pages 7780 to 7808. The concept of metal hydride based hydrogen compression is based on the thermodynamics of the compression system. It follows a 4-step process. First, hydrogen is absorbed at a low pressure and low temperature and forms a hydride. In the second step, the hydride is heated up until the desired elevated hydrogen pressure is reached. The third step consists of the desorption of hydrogen at the elevated pressure and elevated temperature. During that process, the system requires heat to compensate for the endothermic desorption of the hydrogen gas from the metal hydride bed. Metal hydride compressors are used as single stage compressors comprising one pressure vessel but may also be used as multistage compressors comprising a plurality of pressure vessels.

During the absorption and desorption of the hydrogen gas the metal hydrides are usually cooled and heated by use of a cooling/heating jacket surrounding the outside wall of the pressure vessel and/or by cooling/heating tubes inside of the pressure vessel. Typically, a heat exchanging fluid, such as a mixture of water and glycol, is used to flow through the cooling/heating jacket and the cooling/heating tubes and to transport heat towards or away from the metal hydrides. The cooling/heating jacket and/or the cooling/heating tubes together with the heat exchanging fluid add complexity to the metal hydride compressor. Moreover, the cooling/heating jacket and/or the cooling/heating tubes increase the inertial thermal mass which has to be heated and cooled in each compression cycle. Finally, the cooling/heating tubes decrease the volume inside the pressure vessel and thus the capacity of the metal hydride compressor.

Co-pending European patent application No. EP 23181241.3 relates to a metal hydride compressor which is cooled and heated with hydrogen which flows though the metal hydride bed instead of an external liquid as a heat transfer medium. In order to ensure suitable heat flows to and from the metal hydride bed, a high flow rate of hydrogen gas has to be maintained. The electrical energy consumption required to achieve this depends on the pressure drop and thus on the flow resistance within the hydrogen circuit. In addition to the piping, the valves and the heat exchanger, the flow through the metal hydride bed is the largest contributor to the pressure drop.

It is therefore an object of the present invention to provide a pressure vessel with a reduced inertial thermal mass and a reduce flow resistance of a stream of hydrogen gas.

### SUMMARY OF THE INVENTION

This object is achieved by a pressure vessel comprising the features of claim 1. Preferred embodiments are set out in the dependent claims.

According to the present invention the pressure vessel comprises a plurality of metal hydride beds arranged inside the housing, wherein each metal hydride bed includes a metal hydride for absorption and desorption of hydrogen gas. Each metal hydride bed extends transverse to the longitudinal axis and has a circumferential shell surface which sealingly abuts the inner wall of the housing. The metal hydride beds are arranged parallel and at a distance one above the other such that flow channels are formed there between. Further flow channels are formed between the lowermost metal hydride bed and the inner wall of the housing at the first cap as well as between the uppermost metal hydride bed and the inner wall of the housing at the second cap. The flow channels are formed either as an inlet channel connected to one of the at least one inlet tube or an outlet channel connected to one of the at least one outlet tube. The flow channels are alternatingly formed as an inlet channel and an outlet channel in a direction along the longitudinal axis of the cylindrical portion. A first metal hydride bed and a second metal hydride bed of the plurality of metal hydride beds, the first and the second metal hydride bed being arranged adjacent to one another, thus share one inlet channel. The second metal hydride bed and a third metal hydride bed of the plurality of metal hydride beds, the second and the third metal hydride bed being arranged adjacent to one another, share one outlet channel.

Preferably, the first and/or second cap is formed as a closure which can be opened. The first and/or second cap may be formed as flat cap, dome shaped cap or end wall. The cap may be flange-mounted onto the cylindrical portion or may be welded thereto.

Preferably, the pressure vessel is arranged vertically such that the longitudinal axis of the cylindrical portion extends vertically. In such an arrangement the gravity ensures that the metal alloy is homogeneous distributed in the metal hydride beds and that no free paths through which hydrogen gas may stream and which prevent a uniform flow are formed inside the metal hydride bed. The arrangement of multiple metal hydride beds inside the pressure vessel is advantageous as the height of each metal hydride bed can be reduced such that the flow resistance of a flow of hydrogen gas through each bed is reduced. This is because the flow resistance of a metal hydride bed is proportional to the length of the flow path through the metal hydride bed.

In an embodiment of the invention the pressure vessel comprises a plurality of inlet tubes and a plurality of outlet tubes wherein each of the inlet channels is connected to one corresponding inlet tube of the plurality of inlet tubes and wherein each of the outlet channels is connected to one corresponding outlet tube of the plurality of outlet tubes, wherein each of the inlet tubes and each the outlet tubes extend through the inner wall and the outer wall of the housing. The pressure vessel further comprises a first connecting line and a second connecting line, wherein the first connecting line is adapted to connect the plurality of inlet tubes with one single inlet and wherein the second connecting line is adapted to connect the plurality of outlet tubes with one single outlet. Preferably, the flow of hydrogen gas enters the pressure vessel through the single inlet and is distributed to the multiple metal hydride beds via the first connecting line, the multiple inlet channels as well as the inlet channels between the metal hydride beds. Preferably, the hydrogen gas exits the pressure vessel via the outlet channels between the metal hydride beds, the outlet tubes and the second connecting line connecting the plurality of outlet tubes with the one single outlet. Preferably, the first and second connecting lines and the one single inlet as well as the one single outlet are located outside of the pressure vessel and the inlet and outlet tubes lead to the inside of the pressure vessel through the outer and inner wall of the pressure vessel. Such an arrangement facilitates the manufacturing and assembly process and reduces production costs and time.

In another embodiment of the invention the pressure vessel comprises one single inlet tube and one single outlet tube, wherein the inlet tube and the outlet tube each extend through the outer wall of the housing, wherein the pressure vessel further comprises first connecting lines and second connecting lines, wherein each of the first connecting lines are adapted to connect one of the plurality of inlet channels with the inlet tube and wherein each of the second connecting lines are adapted to connect one of the plurality of outlet channels with the outlet tube. Preferably, the first and second connecting lines are located inside a volume enclosed by the outer wall of the housing of the pressure vessel. Thus, only the inlet tube and the outlet tube penetrate through the outer wall of the pressure vessel. This protects the first and second connecting lines from being damaged. Moreover, this arrangement provides a clean appearance of the pressure vessel.

In an embodiment of the invention the first connecting lines and the second connecting lines are arranged between the outer wall and the inner wall of the cylindrical housing or that the first connecting lines and the second connecting lines are arranged inside an interior space enclosed by the inner wall of the housing.

In another embodiment of the invention each metal hydride bed comprises an upper surface and a lower surface and the shell surface connecting the upper surface and the lower surface. Preferably, the metal hydride beds are inserted into the cylindrical housing through the first or second end of the cylindrical portion prior to being closed by the first and second cap, respectively.

In an embodiment of the invention each metal hydride bed comprises micro channels which extend from the lower surface to the upper surface and which are adapted to convey hydrogen gas from the lower surface to the upper surface of the metal hydride bed thereby transferring heat from the metal hydride bed to the hydrogen gas or from the hydrogen gas to the metal hydride bed. Preferably, the micro channels are heated or cooled by hydrogen gas streaming through the micro channels and then transfer heat to or from the metal hydrides in the metal hydride beds via conduction. The micro channels may be arranged in an arbitrary number and any shape. Preferably, the micro channels are manufactured from a material with a high thermal conductivity like aluminum. The micro channels may be connected to one another in order to enhance the conductive heat transfer. A metal hydride bed with micro channels has the advantage of a lower pressure drop and thus a reduced flow resistance in comparison to a metal hydride bed with a homogeneous arrangement of metal alloys in the metal hydride bed. However, due to the micro channels it is expected that the transfer of heat between the hydrogen gas and the metal alloys is reduced compared to a metal hydride bed without any micro channels. Preferably, the micro channels extend at a 90° angle from the lower surface to the upper surface of the metal hydride bed. Alternatively, the micro channels may be tilted relative to the longitudinal axis of the cylindrical portion and may extend in all other directions, too. Also, the shape/path of the micro channels does not have to be straight but can be of any form or style.

In another embodiment of the invention each metal hydride bed comprises a cage which holds the metal hydrides, wherein the cage extends from a first surface which form the lower surface of the metal hydride bed to a second surface which forms the upper surface of the metal hydride bed, and wherein the first surface and the second surface are made from a perforated or mesh-like material permeable to the hydrogen gas. The cage holds the particles of metal alloy in place and enables the hydrogen gas to flow through the metal hydride bed at the same time.

In an embodiment of the invention a distance along the longitudinal axis between the first surface and the second surface of the cage defines a thickness of the cage and, wherein the thickness of all cages of the pressure vessel is the same. Preferably, the thickness of the cage is determined by the desired pressure drop induced by the hydrogen gas flowing through the respective cage and also by an extra volume to compensate for material expansion. Upon hydrogenation, hydride forming alloys classified as room temperature hydrides typically experience a crystalline volume increase of approximately 20 %. Thus, taking into account the volume increase of the hydrides reduces mechanical stresses within the cage.

In another embodiment of the invention the cage is formed as a wire cage, wherein the first surface and the second surface are covered with a metallic filter net. The filter holds back the metal alloy in the wire cage. Preferably, the metallic filter net is finely woven and comprises a mesh size of 1 µm to 5 µm.

In an embodiment of the invention the cage is formed as a sheet metal part and each of the first surface and the second surface of the cage is provided with multiple holes which are permeable to the hydrogen gas. The multiple holes are configured to hold back the metal alloy particles. Preferably, the multiple holes have a diameter in a range of 1 µm to 10 µm.

In another embodiment of the invention the cage is formed as a sheet metal part comprising filtering inserts which are permeable to hydrogen.

In an embodiment of the invention the pressure vessel comprises 5 to 30, preferably 10 to 25, more preferably 15 to 20, most preferably 17 metal hydride beds. Preferably, the number of required metal hydride beds to be stacked on top of each other, and therefore the total height of the pressure vessel depends on the inner diameter of the cylindrical pressure vessel and the mass of metal alloy material.

In another embodiment of the invention each metal hydride bed comprises at least one sealing which is arranged at the circumferential edge of the metal hydride bed to seal the metal hydride bed to the inner wall of the housing. Preferably, the sealing is an elastomer seal.

In an embodiment of the invention the inner wall of the housing is formed by an insulation layer. The insulation layer shields the inner space of the pressure vessel enclosed by the inner wall from the outer wall of the housing against the outer wall of the housing. Thus, the insulation layer reduces the transfer of heat from the inner space of the pressure vessel to the environment of the pressure vessel thereby minimizing energy losses during heating or cooling of the metal hydride bed. A similar insulation might be applied to the first and second connecting lines.

The above object is also achieved by a use of the pressure vessel as described above in a metal hydride compressor. Due to the reduced inertial thermal mass and the reduced flow resistance, the pressure vessel according to the present invention is in particular suitably to be used with a metal hydride compressor.

### BRIEF DESCRIPTION OF THE FIGURES

The invention will now be described in connection with an exemplary embodiment shown in the figures in which:
- Figure 1: shows a cross-sectional view of a pressure vessel according to the present invention,
- Figure 2: shows a perspective view of the cross-sectional view of Figure 1 in detail.

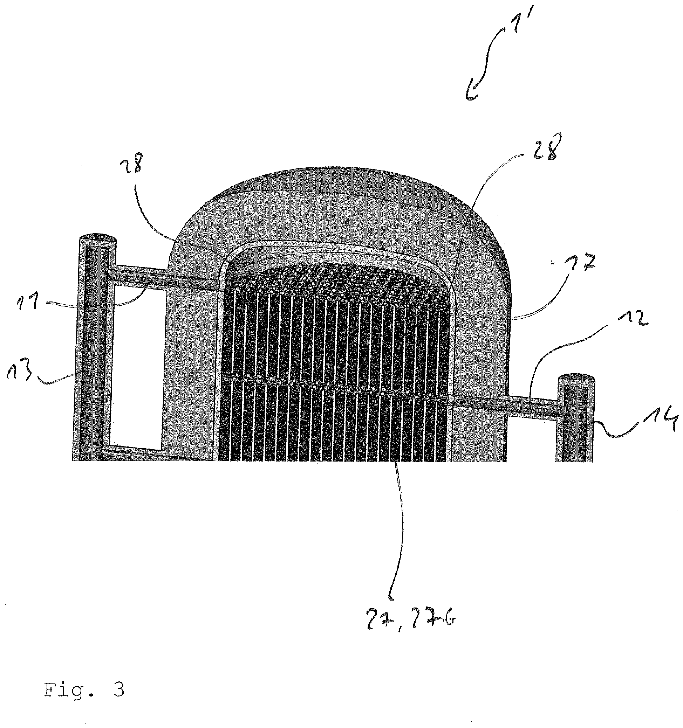

- Figure 3: shows a perspective view of second embodiment of a pressure vessel.

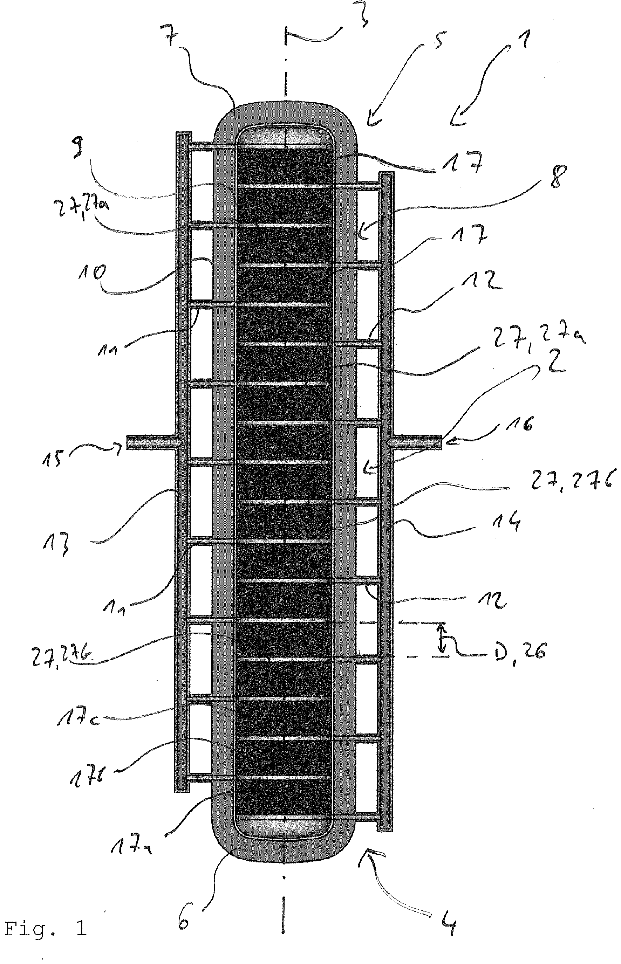

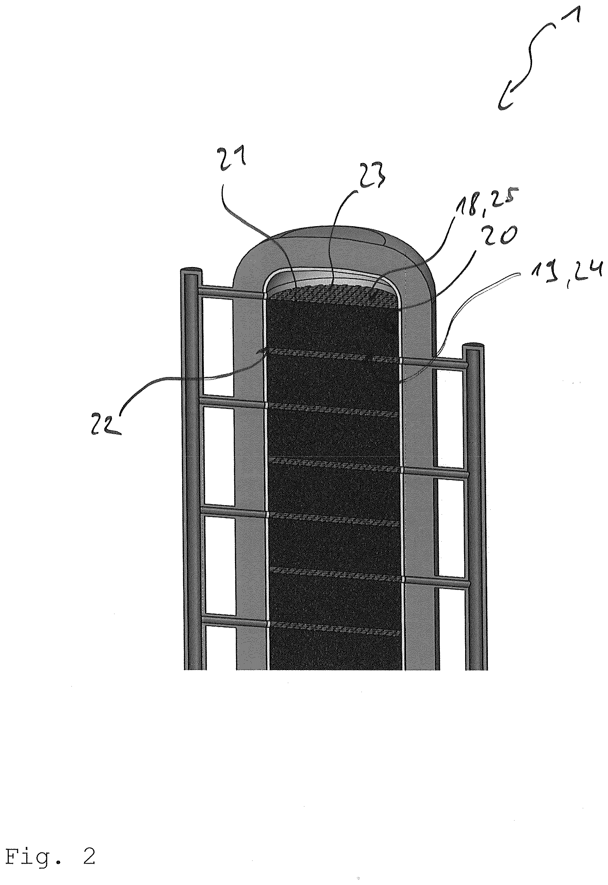

Figures 1 and 2 show a pressure vessel 1 for storing or compressing hydrogen. The pressure vessel 1 is in particular suitable to be used in a metal hydride compressor (not shown).

The pressure vessel 1 comprises a cylindrical portion 2 extending along a longitudinal axis 3 and having a first end 4 and a second end 5. The cylindrical portion 2 comprises a first cap 6 and a second cap 7 at the respective ends 4, 5 of the cylindrical portion 2 so as to form a cylindrical housing 8 having an inner wall 9 and an outer wall 10. The inner wall 9 of the housing 8 is formed by an insulation layer.

The pressure vessel 1 comprises a plurality of inlet tubes 11 for receiving hydrogen into the pressure vessel 1. The inlet tubes 11 are arranged at the cylindrical portion 2. The pressure vessel 1 further comprises a plurality of outlet tubes 12 for discharging hydrogen gas from the pressure vessel 1, wherein the outlet tubes 12 are arranged at the cylindrical portion 2. Each of the inlet tubes 11 and each of the outlet tubes 12 extend through the inner wall 9 and the outer wall 10 of the housing 2. The pressure vessel 1 further comprises a first connecting line 13 and a second connecting line 14. The first connecting line 13 is adapted to connect the inlet tubes 11 with one single inlet 15 and wherein the second connecting line 14 is adapted to connect the outlet tubes 12 with one single outlet 16.

Alternatively, the pressure vessel may comprise one single inlet tube 11 and one single outlet tube 12, wherein the inlet tube 11 and the outlet tube 12 each extend through the outer wall 10 of the housing 8. In this case the pressure vessel 1 may further comprise first connecting lines and second connecting lines (not shown). The first connecting lines may be adapted to connect one of the plurality of inlet channels with the inlet tube and each of the second connecting lines may be adapted to connect one of the plurality of outlet channels with the outlet tube. The first connecting lines and the second connecting lines may be arranged between the outer wall 8 and the inner wall 9 of the cylindrical housing 8. Alternatively, the first connecting lines and the second connecting lines may be arranged inside an interior space enclosed by the inner 9 wall of the housing 8.

The pressure vessel 1 comprises seventeen metal hydride beds 17 arranged inside the housing 8. Each metal hydride bed 17 comprises an upper surface 18, a lower surface 19 and a shell surface 20 connecting the upper surface 18 and the lower surface 19. Each metal hydride bed 17 includes a metal hydride 21 for absorption and desorption of hydrogen gas and extends transverse to the longitudinal axis 3. Each metal hydride bed 17 comprises at least one sealing (not shown) which is arranged at a circumferential edge 22 of the metal hydride bed 17 to seal the metal hydride bed 17 to the inner wall 9 of the housing 8. Thus, the shell surface 20 sealingly abuts the inner wall 9 of the housing 8.

Each metal hydride bed 17 comprises a cage 22 which holds the metal hydrides 21, wherein the cage 22 extends from a first surface 24 which forms the lower surface 19 of the metal hydride bed 17 to a second surface 25 which forms the upper surface 18 of the metal hydride bed 17. The first surface 24 and the second surface 25 are made from a perforated or mesh-like material permeable to the hydrogen gas. A distance D along the longitudinal axis 3 between the first surface 23 and the second surface 24 of the cage 22 defines a thickness 25 of the cage 22. The thickness 25 of all cages 22 of the pressure vessel 1 is the same.

Preferably, the cage 23 is formed as a wire cage, wherein the first surface 24 and the second surface 25 are covered with a metallic filter net. Alternatively, the cage 23 may also be formed as a sheet metal part and each of the first surface 24 and the second surface 25 of the cage 23 is provided with multiple holes which are permeable to the hydrogen gas. As a further alternative the cage 23 may also be formed as a sheet metal part comprising filtering inserts which are permeable to the hydrogen gas.

The metal hydride beds 17 are arranged parallel and at a distance one above the other such that flow channels 27 are formed there between. Further flow channels 27 are formed between the lowermost metal hydride bed 17 and the inner wall 9 of the housing 8 at the first cap 6 as well as between the uppermost metal hydride bed 17 and the inner wall 9 of the housing 8 at the second cap 7. The flow channels 27 are formed either as an inlet channel 27a connected to one of the at least one inlet tube 11 or an outlet channel 27b connected to one of the at least one outlet tube 12. Each of the inlet channels 27a is connected to one corresponding inlet tube 11 and each of the outlet channels 27b is connected to one corresponding outlet tube 12.

The flow channels 27 are alternatingly formed as an inlet channel 27a and an outlet channel 27b in a direction along the longitudinal axis 3 of the cylindrical portion 2 such that a first metal hydride bed 17a and a second metal hydride bed 17b of the plurality of metal hydride beds 17 share one inlet channel and such that the second metal hydride bed 17b and a third metal hydride bed 17c share one outlet channel. The first and the second metal hydride bed 17a, 17b on the one hand and the second and third metal hydride bed 17b, 17c on the other hand are arranged adjacent to one another.

Figure 2 shows a second embodiment of the pressure vessel 1. The pressure vessel 1' differs from the one shown in Fig. 1 in that each metal hydride bed 17 comprises micro channels 28 which extend from the lower surface 19 to the upper surface 18 and which are adapted to convey hydrogen gas from the lower surface 19 to the upper surface 18 of the metal hydride bed 17 thereby transferring heat from the metal hydride bed 17 to the hydrogen gas or from the hydrogen gas to the metal hydride bed 17.

### Reference numerals

- 1,1': pressure vessel
- 2: cylindrical portion
- 3: longitudinal axis
- 4: first end (cylindrical portion)
- 5: second end (cylindrical portion)
- 6: first cap
- 7: second cap
- 8: cylindrical housing
- 9: inner wall (cylindrical housing)
- 10: outer wall (cylindrical housing)
- 11: inlet tube
- 12: outlet tube
- 13: first connecting line
- 14: second connecting line
- 15: inlet
- 16: outlet
- 17: metal hydride bed
- 17a: first metal hydride bed
- 17b: second metal hydride bed
- 17c: third metal hydride bed
- 18: upper surface (metal hydride bed)
- 19: lower surface (metal hydride bed)
- 20: shell surface (metal hydride bed)
- 21: metal hydride
- 22: circumferential edge (metal hydride bed)
- 23: cage (metal hydride bed)
- 24: first surface (cage)
- 25: second surface (cage)
- D: distance (cage)
- 26: Thickness (cage)
- 27: Flow channels
- 27a: inlet channels
- 27b: outlet channels
- 28: micro channels

## Claims

1. A pressure vessel for storing or compressing hydrogen comprising:
- a cylindrical portion (2) extending along a longitudinal axis (3) and having a first end (4) and a second end (5), wherein the cylindrical portion (2) comprises a first cap (6) and a second cap (7) at the respective ends (4, 5) of the cylindrical portion (2) so as to form a cylindrical housing (8) having an inner wall (9) and an outer wall (10),
- at least one inlet tube (11) for receiving hydrogen gas into the pressure vessel (1, 1'), wherein the at least one inlet tube (11) is arranged at the cylindrical portion (2) and,
- at least one outlet tube (12) for discharging hydrogen gas from the pressure vessel (1, 1'), wherein the at least one outlet tube (12) is arranged at the cylindrical portion (2),
**characterized in**
**that** the pressure vessel (1, 1') comprises a plurality of metal hydride beds (17) arranged inside the housing (8), wherein each metal hydride bed (17) includes a metal hydride (21) for absorption and desorption of hydrogen gas,
**that** each metal hydride bed (17) extends transverse to the longitudinal axis (3), each metal hydride bed (17) having a circumferential shell surface (20) which sealingly abuts the inner wall (9) of the housing (8),
**that** the metal hydride beds (17) are arranged parallel and at a distance one above the other such that flow channels (27) are formed there between,
**that** further flow channels (27) are formed between the lowermost metal hydride bed (17) and the inner wall (9) of the housing (8) at the first cap (6) as well as between the uppermost metal hydride bed (17) and the inner wall (9) of the housing (8) at the second cap (7),
**that** the flow channels (27) are formed either as an inlet channel (27a) connected to one of the at least one inlet tube (11) or an outlet channel (27b) connected to one of the at least one outlet tube (12) and,
**that** the flow channels (27) are alternatingly formed as an inlet channel (27a) and an outlet channel (27b) in a direction along the longitudinal axis (3) of the cylindrical portion (2) such that a first metal hydride bed (17a) and a second metal hydride bed (17b) of the plurality of metal hydride beds (17), the first and the second metal hydride bed (17a, 17b) being arranged adjacent to one another, share one inlet channel (27a) and such that the second metal hydride bed (17b) and a third metal hydride bed (17c) of the plurality of metal hydride beds (17), the second and the third metal hydride bed (17b, 17c) being arranged adjacent to one another, share one outlet channel (27b).

2. The pressure vessel according to claim 1 **characterized in that** the pressure vessel (1, 1') comprises a plurality of inlet tubes (11) and a plurality of outlet tubes (12) wherein each of the inlet channels (27a) is connected to one corresponding inlet tube (11) of the plurality of inlet tubes (11) and wherein each of the outlet channels (27b) is connected to one corresponding outlet tube (12) of the plurality of outlet tubes (12), wherein each of the inlet tubes (11) and each of the outlet tubes (12) extend through the inner wall (9) and the outer wall (10) of the housing (8), wherein the pressure vessel (1, 1') further comprises a first connecting line (13) and a second connecting line (14), wherein the first connecting line (13) is adapted to connect the plurality of inlet tubes (11) with one single inlet (15) and wherein the second connecting line (14) is adapted to connect the plurality of outlet tubes (12) with one single outlet (16).

3. The pressure vessel according to claim 1 **characterized in that** the pressure vessel (1, 1') comprises one single inlet tube (11) and one single outlet tube (12), wherein the inlet tube (11) and the outlet tube (12) each extend through the outer wall (10) of the housing (8), wherein the pressure vessel (1, 1') further comprises first connecting lines and second connecting lines, wherein each of the first connecting lines are adapted to connect one of the plurality of inlet channels (27a) with the inlet tube (11) and wherein each of the second connecting lines are adapted to connect one of the plurality of outlet channels (27b) with the outlet tube (12).

4. The pressure vessel according to claim 2 **characterized in that** the first connecting lines and the second connecting lines are arranged between the outer wall (10) and the inner wall (9) of the cylindrical housing (8) or that the first connecting lines and the second connecting lines are arranged inside an interior space enclosed by the inner wall (9) of the housing (8).

5. The pressure vessel according to any of the preceding claims **characterized in that** each metal hydride bed (17) comprises an upper surface (18) and a lower surface (19) and the shell surface (20) connecting the upper surface (18) and the lower surface (19).

6. The pressure vessel according to claim 5 **characterized in that** each metal hydride bed (17) comprises micro channels (28) which extend from the lower surface (19) to the upper surface (18) and which are adapted to convey hydrogen gas from the lower surface (19) to the upper surface (18) of the metal hydride bed (17) thereby transferring heat from the metal hydride bed (17) to the hydrogen gas or from the hydrogen gas to the metal hydride bed (17).

7. The pressure vessel according to any of the preceding claims **characterized in that** each metal hydride bed (17) comprises a cage (23) which holds the metal hydrides (21), wherein the cage (23) extends from a first surface (24) which forms the lower surface (19) of the metal hydride bed (17) to a second surface (25) which forms the upper surface (18) of the metal hydride bed (17), and wherein the first surface (24) and the second surface (25) are made from a perforated or mesh-like material permeable to the hydrogen gas.

8. The pressure vessel according to claim 7 **characterized in that** a distance (D) along the longitudinal axis (3) between the first surface (24) and the second surface (25) of the cage (23) defines a thickness (26) of the cage (23) and, wherein the thickness (25) of all cages (23) of the pressure vessel (1, 1') is the same.

9. The pressure vessel according to claim 7 **characterized in that** the cage (23) is formed as a wire cage, wherein the first surface (24) and the second surface (25) are covered with a metallic filter net.

10. The pressure vessel according to claim 7 **characterized in that** the cage (23) is formed as a sheet metal part and each of the first surface (24) and the second surface (25) of the cage (23) is provided with multiple holes which are permeable to the hydrogen gas.

11. The pressure vessel according to claim 7 **characterized in that** the cage (23) is formed as a sheet metal part comprising filtering inserts which are permeable to hydrogen gas.

12. The pressure vessel according to any of the preceding claims **characterized in that** the pressure vessel (1, 1') comprises 5 to 30, preferably 10 to 25, more preferably 15 to 20, most preferably 17 metal hydride beds (17).

13. The pressure vessel according to any of the preceding claims **characterized in that** each metal hydride bed (17) comprises at least one sealing which is arranged at a circumferential edge (22) of the metal hydride bed (17) to seal the metal hydride bed (17) to the inner wall (9) of the housing (8).

14. The pressure vessel according to any of the preceding claims **characterized in that** the inner wall (9) of the housing (8) is formed by an insulation layer.

15. A use of the pressure vessel (1, 1') according to any of claims 1 to 14 in a metal hydride compressor.

## Amended claims

### Amended claims in accordance with Rule 137(2) EPC.

1. A pressure vessel for storing or compressing hydrogen comprising:
- a cylindrical portion (2) extending along a longitudinal axis (3) and having a first end (4) and a second end (5), wherein the cylindrical portion (2) comprises a first cap (6) and a second cap (7) at the respective ends (4, 5) of the cylindrical portion (2) so as to form a cylindrical housing (8) having an inner wall (9) and an outer wall (10),
- at least one inlet tube (11) for receiving hydrogen gas into the pressure vessel (1, 1') and,
- at least one outlet tube (12) for discharging hydrogen gas from the pressure vessel (1, 1'),
wherein the pressure vessel (1, 1') comprises a plurality of metal hydride beds (17) arranged inside the housing (8), wherein each metal hydride bed (17) includes a metal hydride (21) for absorption and desorption of hydrogen gas,
wherein each metal hydride bed (17) extends transverse to the longitudinal axis (3), each metal hydride bed (17) having a circumferential shell surface (20) which sealingly abuts the inner wall (9) of the housing (8),
that the metal hydride beds (17) are arranged parallel and at a distance one above the other such that flow channels (27) are formed there between,
that further flow channels (27) are formed between the lowermost metal hydride bed (17) and the inner wall (9) of the housing (8) at the first cap (6) as well as between the uppermost metal hydride bed (17) and the inner wall (9) of the housing (8) at the second cap (7),
wherein the flow channels (27) are formed either as an inlet channel (27a) connected to one of the at least one inlet tube (11) or an outlet channel (27b) connected to one of the at least one outlet tube (12) and,
wherein the flow channels (27) are alternatingly formed as an inlet channel (27a) and an outlet channel (27b) in a direction along the longitudinal axis (3) of the cylindrical portion (2) such that a first metal hydride bed (17a) and a second metal hydride bed (17b) of the plurality of metal hydride beds (17), the first and the second metal hydride bed (17a, 17b) being arranged adjacent to one another, share one inlet channel (27a) and such that the second metal hydride bed (17b) and a third metal hydride bed (17c) of the plurality of metal hydride beds (17), the second and the third metal hydride bed (17b, 17c) being arranged adjacent to one another, share one outlet channel (27b),
**characterized in**
**that** the at least one inlet tube (11) is arranged at the cylindrical portion (2),
**that** the at least one outlet tube (12) is arranged at the cylindrical portion (2) and that the pressure vessel (1, 1') comprises a plurality of inlet tubes (11) and a plurality of outlet tubes (12), wherein each of the inlet channels (27a) is connected to one corresponding inlet tube (11) of the plurality of inlet tubes (11) and, wherein each of the outlet channels (27b) is connected to one corresponding outlet tube (12) of the plurality of outlet tubes (12), wherein each of the inlet tubes (11) and each of the outlet tubes (12) extend through the inner wall (9) and the outer wall (10) of the housing (8), wherein the pressure vessel (1, 1') further comprises a first connecting line (13) and a second connecting line (14), wherein the first connecting line (13) is adapted to connect the plurality of inlet tubes (11) with one single inlet (15) and wherein the second connecting line (14) is adapted to connect the plurality of outlet tubes (12) with one single outlet (16).

2. The pressure vessel according to claim 1 **characterized in that** the pressure vessel (1, 1') comprises one single inlet tube (11) and one single outlet tube (12), wherein the inlet tube (11) and the outlet tube (12) each extend through the outer wall (10) of the housing (8), wherein the pressure vessel (1, 1') further comprises first connecting lines and second connecting lines, wherein each of the first connecting lines are adapted to connect one of the plurality of inlet channels (27a) with the inlet tube (11) and wherein each of the second connecting lines are adapted to connect one of the plurality of outlet channels (27b) with the outlet tube (12).

3. The pressure vessel according to claim 1 **characterized in that** the first connecting lines and the second connecting lines are arranged between the outer wall (10) and the inner wall (9) of the cylindrical housing (8) or that the first connecting lines and the second connecting lines are arranged inside an interior space enclosed by the inner wall (9) of the housing (8).

4. The pressure vessel according to any of the preceding claims **characterized in that** each metal hydride bed (17) comprises an upper surface (18) and a lower surface (19) and the shell surface (20) connecting the upper surface (18) and the lower surface (19).

5. The pressure vessel according to claim 4 **characterized in that** each metal hydride bed (17) comprises micro channels (28) which extend from the lower surface (19) to the upper surface (18) and which are adapted to convey hydrogen gas from the lower surface (19) to the upper surface (18) of the metal hydride bed (17) thereby transferring heat from the metal hydride bed (17) to the hydrogen gas or from the hydrogen gas to the metal hydride bed (17).

6. The pressure vessel according to any of the preceding claims **characterized in that** each metal hydride bed (17) comprises a cage (23) which holds the metal hydrides (21), wherein the cage (23) extends from a first surface (24) which forms the lower surface (19) of the metal hydride bed (17) to a second surface (25) which forms the upper surface (18) of the metal hydride bed (17), and wherein the first surface (24) and the second surface (25) are made from a perforated or mesh-like material permeable to the hydrogen gas.

7. The pressure vessel according to claim 6 **characterized in that** a distance (D) along the longitudinal axis (3) between the first surface (24) and the second surface (25) of the cage (23) defines a thickness (26) of the cage (23) and, wherein the thickness (25) of all cages (23) of the pressure vessel (1, 1') is the same.

8. The pressure vessel according to claim 6 **characterized in that** the cage (23) is formed as a wire cage, wherein the first surface (24) and the second surface (25) are covered with a metallic filter net.

9. The pressure vessel according to claim 6 **characterized in that** the cage (23) is formed as a sheet metal part and each of the first surface (24) and the second surface (25) of the cage (23) is provided with multiple holes which are permeable to the hydrogen gas.

10. The pressure vessel according to claim 6 **characterized in that** the cage (23) is formed as a sheet metal part comprising filtering inserts which are permeable to hydrogen gas.

11. The pressure vessel according to any of the preceding claims **characterized in that** the pressure vessel (1, 1') comprises 5 to 30, preferably 10 to 25, more preferably 15 to 20, most preferably 17 metal hydride beds (17).

12. The pressure vessel according to any of the preceding claims **characterized in that** each metal hydride bed (17) comprises at least one sealing which is arranged at a circumferential edge (22) of the metal hydride bed (17) to seal the metal hydride bed (17) to the inner wall (9) of the housing (8).

13. The pressure vessel according to any of the preceding claims **characterized in that** the inner wall (9) of the housing (8) is formed by an insulation layer.

14. A use of the pressure vessel (1, 1') according to any of claims 1 to 13 in a metal hydride compressor.
